# EUROPÄISCHE PATENTSCHRIFT

(11) **EP 4 334 178 B1**
(45) Veröffentlichungstag und Bekanntmachung des Hinweises auf die Patenterteilung: **26.02.2025**
(21) Anmeldenummer: 22724464.7
(22) Anmeldetag: 29.04.2022
(51) Int. Cl.: B60T 8/36, B60T 8/48, B60T 13/14, B60T 13/66, B60T 13/68

(54) **STEUERVORRICHTUNG UND VERFAHREN ZUM ZUMINDEST TEILWEISEN ENTLEEREN EINES FLÜSSIGKEITSSPEICHERS EINES BREMSSYSTEMS EINES FAHRZEUGS**
CONTROL DEVICE AND METHOD FOR AT LEAST PARTIALLY EMPTYING A FLUID RESERVOIR OF A BRAKING SYSTEM OF A VEHICLE
DISPOSITIF DE COMMANDE ET PROCÉDÉ SERVANT À VIDER AU MOINS PARTIELLEMENT UN RÉSERVOIR DE FLUIDE D'UN SYSTÈME DE FREINAGE D'UN VÉHICULE

(30) Priorität: 05.05.2021 DE 102021204553
(43) Veröffentlichungstag der Anmeldung: 13.03.2024
(73) Patentinhaber: Robert Bosch GmbH, 70442 Stuttgart (DE)
(72) Erfinder: NAGAKURA, Yasutaka, 70469 Stuttgart (DE); HEINZ, Benjamin, 74246 Eberstadt (DE)
(86) Internationale Anmeldenummer: PCT/EP2022/061526
(87) Internationale Veröffentlichungsnummer: WO 2022/233732

(56) Entgegenhaltungen:
- DE-A1- 102018 216 000
- DE-A1- 102019 207 608
- KR-A- 20170 040 570

## Beschreibung

Die Erfindung betrifft eine Steuervorrichtung für ein Bremssystem eines Fahrzeugs mit zumindest einem einen Flüssigkeitsspeicher umfassenden Bremskreis. Ebenso betrifft die Erfindung ein Bremssystem für ein Fahrzeug. Des Weiteren betrifft die Erfindung ein Verfahren zum zumindest teilweisen Entleeren eines Bremsflüssigkeitsspeichers eines Bremssystems eines Fahrzeugs.

### Stand der Technik

Aus dem Stand der Technik, wie beispielsweise der DE 10 2019 211 236 A1, sind verschiedene Bremssystemtypen bekannt, wobei ein derartiges Bremssystem zumindest einen Bremskreis mit einem Flüssigkeitsspeicher aufweist.

Die Offenlegung DE 10 2019 207 608 A1 offenbart eine Steuervorrichtung für ein Bremssystem eines Fahrzeugs, welche dazu ausgelegt ist, anhand mindestens eines an die Steuervorrichtung bereitgestellten Sensorsignals mindestens eines Sensors zu erkennen oder zu schätzen, ob eine auf ein an einem Hauptbremszylinder des Bremssystems angebundenes Bremsbetätigungselement ausgeübte Fahrerbremskraft zeitlich abnimmt. Die Steuervorrichtung ist auch dazu ausgelegt, zumindest zeitweise während einer erkannten oder geschätzten zeitlichen Abnahme der Fahrerbremskraft ein Hochdruckschaltventil eines an dem Hauptbremszylinder angebundenen Bremskreises mit zumindest einem Radbremszylinder, über welches eine Speicherkammer des Bremskreises mit dem Hauptbremszylinder verbunden ist, in seinen offenen Zustand zu steuern und/oder zu halten, so dass Bremsflüssigkeit aus der Speicherkammer über das in seinem offenen Zustand vorliegende Hochdruckschaltventil in den Hauptbremszylinder transferierbar ist.

### Offenbarung der Erfindung

Die Erfindung schafft eine Steuervorrichtung für ein Bremssystem eines Fahrzeugs mit zumindest einem einen Flüssigkeitsspeicher umfassenden Bremskreis mit den Merkmalen des Anspruchs 1, ein Bremssystem für ein Fahrzeug mit den Merkmalen des Anspruchs 4 und ein Verfahren zum zumindest teilweisen Entleeren eines Flüssigkeitsspeichers eines Bremssystems eines Fahrzeugs mit den Merkmalen des Anspruchs 8.

### Vorteile der Erfindung

Die vorliegende Erfindung schafft vorteilhafte Möglichkeiten zum zumindest teilweisen Entleeren eines Flüssigkeitsspeichers eines Bremssystems eines Fahrzeugs bei gleichzeitiger Begrenzung oder Verhinderung eines Bremsflüssigkeitsstroms durch das einzige Radauslassventil oder alle Radauslassventile eines mit dem zumindest entleerten Flüssigkeitsspeicher ausgebildeten Bremskreises des Bremssystems. Damit entfällt die herkömmliche Notwendigkeit, das mindestens eine Radauslassventil des mit dem zu entleerenden Flüssigkeitsspeicher ausgebildeten Bremskreises mit je einem eigenen Filter für einen Bremsflüssigkeitstransfer aus dem Flüssigkeitsspeicher durch das jeweilige Ventil, wie beispielsweise einen Netzfilter oder Maschenfilter (Mesh Filter), auszustatten. Dies ermöglicht eine kostengünstigere Herstellbarkeit des mindestens einen Radauslassventils des mit dem zu entleerenden Flüssigkeitsspeicher ausgebildeten Bremskreises. Eine Nutzung der vorliegenden Erfindung steigert damit eine Designfreiheit für das mindestens eine Radauslassventil des mit dem Flüssigkeitsspeicher ausgebildeten Bremskreises. Zusätzlich kann dies bei einer Herstellung eines die vorliegende Erfindung anwendenden Bremssystems zur Reduzierung der eingesetzten Auslassventiltypen beitragen.

Bei einer vorteilhaften Ausführungsform der Steuervorrichtung ist die Elektronikeinrichtung dazu ausgelegt und/oder programmiert, das Umschaltventil des Bremskreises während der gesamten Öffnungszeit in seinen geschlossenen Zustand zu steuern oder zu halten. Ein Geschlossensteuern oder Geschlossenhalten des Umschaltventils trägt vorteilhaft zur Verhinderung des während der Öffnungszeit unerwünschten Bremsflüssigkeitstransfers aus dem Flüssigkeitsspeicher durch das mindestens eine Radauslassventil des Bremskreises bei.

Alternativ oder ergänzend kann die Elektronikeinrichtung auch dazu ausgelegt und/oder programmiert sein, das einzige Radauslassventil des Bremskreises oder das mindestens eine der Radauslassventile des Bremskreises, welches aufgrund seiner Auslegung und seiner Ausrichtung in einem zumindest teilweise geöffneten Zustand für Bremsflüssigkeit aus dem Flüssigkeitsspeicher durchlässig ist, während der gesamten Öffnungszeit in seinen geschlossenen Zustand zu steuern und/oder zu halten. Auch mittels einer derartigen Ausbildung/Programmierung der Steuervorrichtung/ihrer Elektronikeinrichtung kann der unerwünschte Bremsflüssigkeitstransfer aus dem Flüssigkeitsspeicher durch das mindestens eine Radauslassventil während der gesamten Öffnungszeit unterbunden werden.

Die vorausgehend beschriebenen Vorteile sind auch bei einem Bremssystem für ein Fahrzeug gewährleistet, welches mit einer entsprechenden Steuervorrichtung und zumindest dem an dem Hauptbremszylinder des Bremssystems angebundenen Bremskreis mit dem Flüssigkeitsspeicher und dem mittels der Elektronikeinrichtung der Steuervorrichtung ansteuerbaren Hochdruckschaltventil ausgebildet ist, wobei der Bremskreis zusätzlich noch das Umschaltventil, das einzige Radauslassventil und/oder die Radauslassventile umfasst, und wobei das Umschaltventil, das einzige Radauslassventil und/oder die Radauslassventile mittels der Elektronikeinrichtung ansteuerbar sind.

Vorzugsweise weisen das einzige Radauslassventil oder die Radauslassventile nur je einen Filter für einen Bremsflüssigkeitstransfer von einem dem jeweiligen Ventil zugeordneten Radbremszylinder zu dem Flüssigkeitsspeicher auf. Bevorzugter Weise ist/sind somit das einzige Radauslassventil oder die Radauslassventile jeweils für den Bremsflüssigkeitstransfer aus dem Flüssigkeitsspeicher durch das jeweilige Ventil filterlos. Dies trägt zur Reduzierung der Herstellungskosten des mindestens einen Radauslassventils des mit dem zu entleerenden Flüssigkeitsspeicher ausgebildeten Bremskreises bei, und macht damit das Bremssystem kostengünstiger.

Beispielsweise kann der Bremskreis ein erstes Radauslassventil und ein zweites Radauslassventil als seine Radauslassventile umfassen, wobei ein an dem Hauptbremszylinder mündender erster Leitungsabschnitt des Bremskreises sich zu dem Umschaltventil und zu dem Hochdruckschaltventil aufgabelt, ein an dem Umschaltventil mündender zweiter Leitungsabschnitt des Bremskreises sich zu einem ersten Radeinlassventil und einem zweiten Radeinlassventil aufgabelt, ein erster Radbremszylinder an einem dritten Leitungsabschnitt des Bremskreises, welcher sich zu dem ersten Radeinlassventil und dem ersten Radauslassventil aufgabelt, angebunden oder anbindbar ist, ein zweiter Radbremszylinder an einem vierten Leitungsabschnitt des Bremskreises, welcher sich zu dem zweiten Radeinlassventil und dem zweiten Radauslassventil aufgabelt, angebunden oder anbindbar ist, ein an einer Ansaugseite einer Pumpeinrichtung des Bremskreises mündender fünfter Leitungsabschnitt des Bremskreises sich zu dem ersten Radauslassventil und dem zweiten Radauslassventil aufgabelt, der Flüssigkeitsspeicher an dem fünften Leitungsabschnitt angebunden ist, ein an einer Förderseite der Pumpeinrichtung mündender sechster Leitungsabschnitt des Bremskreises an dem zweiten Leitungsabschnitt mündet und ein an dem Hochdruckschaltventil mündender siebter Leitungsabschnitt des Bremskreises an dem fünften Leitungsabschnitt mündet. Die vorliegende Erfindung ist somit für eine Vielzahl von Bremssystemtypen, welche herkömmlicherweise häufig an verschiedenen Fahrzeugtypen/Kraftfahrzeugtypen eingesetzt sind, verwendbar. Es wird jedoch darauf hingewiesen, dass die hier beschriebene hydraulische Ausbildung des mit dem Flüssigkeitsspeicher ausgestatteten Bremskreises nur beispielhaft zu interpretieren ist.

Die oben erläuterten Vorteile werden auch durch ein Ausführen eines korrespondierenden Verfahrens zum zumindest teilweisen Entleeren eines Flüssigkeitsspeichers eines Bremssystems eines Fahrzeugs geschaffen. Es wird ausdrücklich darauf hingewiesen, dass das Verfahren zum zumindest teilweisen Entleeren eines Flüssigkeitsspeichers eines Bremssystems eines Fahrzeugs gemäß den oben erläuterten Ausführungsformen der Steuervorrichtung und/oder des Bremssystems weitergebildet werden kann.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer Ausführungsform der Steuervorrichtung, bzw. eines damit zusammenwirkenden Bremssystems;
- Fig. 2a bis 2d: ein Flussdiagramm, ein Zeitdiagramm und schematische Teildarstellungen eines Bremssystems zum Erläutern einer ersten Ausführungsform des Verfahrens zum zumindest teilweisen Entleeren eines Flüssigkeitsspeichers eines Bremssystems eines Fahrzeugs; und
- Fig. 3a bis 3d: ein Flussdiagramm, ein Zeitdiagramm und schematische Teildarstellungen eines Bremssystems zum Erläutern einer zweiten Ausführungsform des Verfahrens zum zumindest teilweisen Entleeren eines Flüssigkeitsspeichers eines Bremssystems eines Fahrzeugs.

### Ausführungsformen der Erfindung

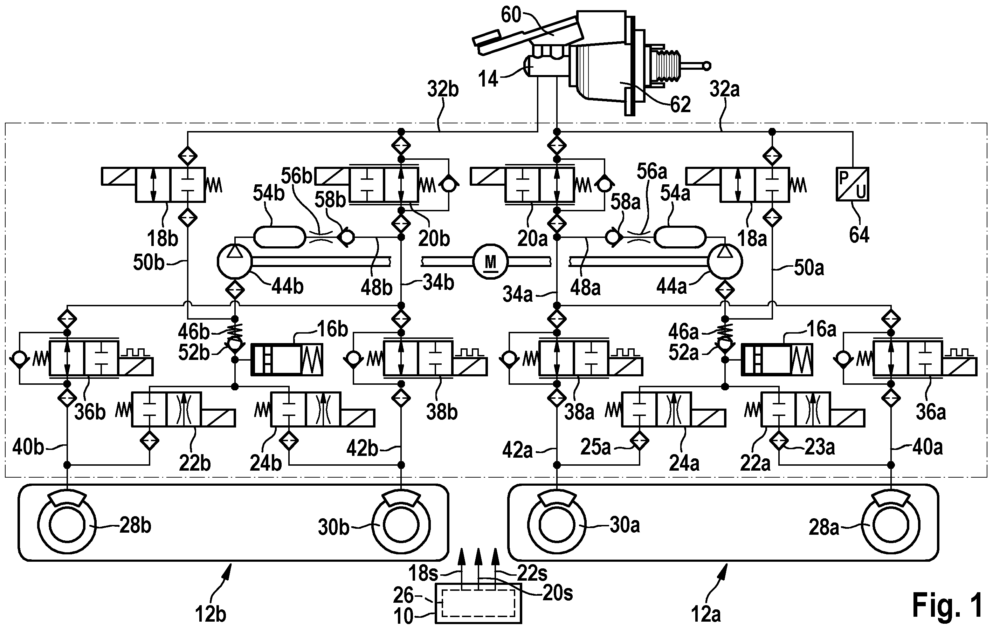

Fig. 1 zeigt eine schematische Darstellung einer Ausführungsform der Steuervorrichtung, bzw. eines damit zusammenwirkenden Bremssystems.

Die im Weiteren beschriebene Steuervorrichtung 10 kann mit (nahezu) jedem Bremssystem zusammenwirken, welches zumindest einen Bremskreis 12a und 12b aufweist, welcher an einem Hauptbremszylinder 14 des Bremssystems angebunden ist, mit einem Flüssigkeitsspeicher 16a oder 16b und einem Hochdruckschaltventil 18a oder 18b ausgebildet ist, und welcher zusätzlich noch ein Umschaltventil 20a oder 20b und/oder mindestens ein Radauslassventil 22a, 22b, 24a und 24b umfasst. Ebenso ist eine Verwendbarkeit der Steuervorrichtung 10 auf keinen speziellen Fahrzeugtyp/Kraftfahrzeugtyp des mit dem jeweiligen Bremssystem ausgestatteten Fahrzeugs/Kraftfahrzeugs beschränkt.

Die Steuervorrichtung 10 hat eine Elektronikeinrichtung 26, welche dazu ausgelegt und/oder programmiert ist, das Hochdruckschaltventil 18a oder 18b des mit dem zu entleerenden Flüssigkeitsspeicher 16a oder 16b ausgestatteten Bremskreises 12a oder 12b für eine vorgegebene oder festgelegte Öffnungszeit mittels mindestens eines Steuersignals 18s in einen zumindest teilweise geöffneten Zustand zu schalten. Auf diese Weise sorgt die Steuervorrichtung 10/ihre Elektronikeinrichtung 26 dafür, dass während der Öffnungszeit Bremsflüssigkeit aus dem Flüssigkeitsspeicher 16a oder 16b über das zumindest teilweise geöffnete Hochdruckschaltventil 18a oder 18b des gleichen Bremskreises 12a oder 12b in den Hauptbremszylinder 14 transferierbar ist/fließt. Der Volumenhaushalt des Bremssystems kann somit mittels der Steuervorrichtung 10/ihrer Elektronikeinrichtung 26 durch ein zumindest teilweises Entleeren des Flüssigkeitsspeichers 16a oder 16b ausgeglichen werden.

Außerdem ist die Elektronikeinrichtung 26 zusätzlich dazu ausgelegt und/oder programmiert, das Umschaltventil 20a oder 20b des mit dem zu entleerenden Flüssigkeitsspeicher 16a oder 16b ausgebildeten Bremskreises 12a oder 12b, das einzige Radauslassventil des jeweiligen Bremskreises 12a oder 12b und/oder alle Radauslassventile 22a, 22b, 24a und 24b des jeweiligen Bremskreises 12a oder 12b während der gesamten Öffnungszeit mittels mindestens eines Steuersignals 20s und 22s in einen Zustand, in welchem ein Bremsflüssigkeitstransfer aus dem jeweiligen Flüssigkeitsspeicher 16a oder 16b durch das jeweilige Ventil 20a, 20b, 22a, 22b, 24a und 24b blockiert ist, zu steuern und/oder zu halten. Die Steuervorrichtung 10/ihre Elektronikeinrichtung 26 begrenzt somit zumindest einen unerwünschten Bremsflüssigkeitsstrom aus dem Flüssigkeitsspeicher 16a oder 16b durch das mindestens eine Radauslassventil 22a, 22b, 24a und 24b des jeweiligen Bremskreises 12a oder 12b. Sofern die Elektronikeinrichtung 26 dazu ausgelegt und/oder programmiert ist, das einzige Radauslassventil des jeweiligen Bremskreises 12a oder 12b oder alle Radauslassventile 22a, 22b, 24a und 24b des jeweiligen Bremskreises 12a oder 12b während der gesamten Öffnungszeit in den einen Bremsflüssigkeitstransfer aus dem jeweiligen Flüssigkeitsspeicher 16a oder 16b durch das jeweilige Ventil 22a, 22b, 24a und 24b blockierenden Zustand zu steuern und/oder zu halten, kann der unerwünschte Bremsflüssigkeitsstrom aus dem Flüssigkeitsspeicher 16a oder 16b durch das mindestens eine Radauslassventil 22a, 22b, 24a und 24b auch (nahezu) vollständig unterbunden werden.

Sowohl bei einer Begrenzung als auch bei einem (nahezu) vollständigen Unterbinden des unerwünschten Bremsflüssigkeitsstroms aus dem Flüssigkeitsspeicher 16a oder 16b durch das mindestens eine Radauslassventil 22a, 22b, 24a oder 24b entfällt eine herkömmliche Notwendigkeit zur Ausbildung/Ausstattung des mindestens einen Radauslassventils 22a, 22b, 24a und 24b mit einem eigenen Filter für einen Bremsflüssigkeitstransfer aus dem Flüssigkeitsspeicher 16a oder 16b durch das jeweilige Ventil 22a, 22b, 24a und 24b, wie beispielsweise einem entsprechenden Netzfilter oder Maschenfilter (Mesh Filter). Bevorzugt ist deshalb, dass das einzige Radauslassventil oder die Radauslassventile 22a, 22b, 24a und 24b nur je einen Filter 23a, 23b, 25a und 25b für einen Bremsflüssigkeitstransfer von einem dem jeweiligen Ventil 22a, 22b, 24a und 24b zugeordneten Radbremszylinder 28a, 28b, 30a und 30b zu dem Flüssigkeitsspeicher 16a oder 16b hat/haben. Man kann dies auch damit umschreiben, dass das einzige Radauslassventil oder die Radauslassventile 22a, 22b, 24a und 24b jeweils für den Bremsflüssigkeitstransfer aus dem Flüssigkeitsspeicher 16a oder 16b durch das jeweilige Ventil 22a, 22b, 24a und 24b filterlos ist/sind. Dies reduziert die Herstellungskosten für das mindestens eine Radauslassventil 22a, 22b, 24a oder 24b des mit der Steuervorrichtung 10 zusammenwirkenden Bremssystems und erleichtert seine Herstellbarkeit.

Der Verzicht auf einen eigenen Filter für einen Bremsflüssigkeitstransfer aus dem Flüssigkeitsspeicher 16a oder 16b durch das jeweilige Radauslassventil 22a, 22b, 24a oder 24b ermöglicht mehr Freiheiten an dem Design des jeweiligen Radauslassventils 22a, 22b, 24a oder 24b des mit dem Flüssigkeitsspeicher 16a oder 16b ausgebildeten Bremskreises 12a oder 12b. Dies kann bei einer Herstellung des jeweiligen Bremssystems zur Reduzierung der eingesetzten Auslassventiltypen genutzt werden.

Zum Bewirken der oben beschriebenen Vorteile ist es ausreichend, wenn die Elektronikeinrichtung 26 dazu ausgelegt und/oder programmiert ist, das Umschaltventil 20a oder 20b des Bremskreises 12a oder 12b während der gesamten Öffnungszeit des Hochdruckschaltventils 18a oder 18b des gleichen Bremskreises 12a oder 12b in seinen geschlossenen Zustand zu steuern oder zu halten. (Unter dem in seinen geschlossenen Zustand gesteuerten oder gehaltenen Umschaltventil 20a oder 20b ist ein Ventil 20a oder 20b zu verstehen, welches aufgrund seiner Auslegung und seiner Ausrichtung in einem zumindest teilweise geöffneten Zustand für Bremsflüssigkeit aus dem Flüssigkeitsspeicher 16a oder 16b und durch das mindestens eine Radauslassventil 22a, 22b, 24a und 24b des Bremskreises 12a oder 12b durchlässig ist.) Ebenso sind die oben beschriebenen Vorteile gewährleistet, wenn die Elektronikeinrichtung 26 dazu ausgelegt und/oder programmiert ist, das einzige Radauslassventil des Bremskreises 12a oder 12b oder das mindestens eine der Radauslassventile 22a, 22b, 24a und 24b des Bremskreises 12a oder 12b, welches aufgrund seiner Auslegung und seiner Ausrichtung in einem zumindest teilweise geöffneten Zustand für Bremsflüssigkeit aus dem Flüssigkeitsspeicher 16a oder 16b durchlässig ist, während der gesamten Öffnungszeit des Hochdruckschaltventils 18a oder 18b des gleichen Bremskreises 12a oder 12b in seinen geschlossenen Zustand zu steuern und/oder zu halten.

Die Öffnungszeit, während welcher das Hochdruckschaltventil 18a oder 18b des Bremskreises 12a oder 12b mit dem zu entleerenden Flüssigkeitsspeicher 16a oder 16b in seinen zumindest teilgeöffneten Zustand gesteuert ist/wird, kann der Elektronikeinrichtung 26 (fest) vorgegeben sein. Als vorteilhafte Weiterbildung kann die Elektronikeinrichtung 26 auch dazu ausgelegt und/oder programmiert sein, die Öffnungszeit (selbst) festzulegen, beispielsweise unter Berücksichtigung eines in dem zu entleerenden Flüssigkeitsspeicher 16a oder 16b vorliegenden Speicherdrucks. Unter der Festlegung der Öffnungszeit durch die Elektronikeinrichtung 26 kann auch ein Abwarten bis zu einem die Öffnungszeit beendenden vorgegebenen Ereignis verstanden werden. Insbesondere kann die Elektronikeinrichtung 26 dazu ausgelegt und/oder programmiert sein, die Öffnungszeit solange "abzuwarten", bis der Fahrer wieder verstärkt gegen das Bremspedal tritt und/oder bis der Speicherdruck in dem Flüssigkeitsspeicher 16a oder 16b durch das Fließen von Bremsflüssigkeit aus dem Flüssigkeitsspeicher 16a oder 16b über das zumindest teilweise geöffnete Hochdruckschaltventil 18a oder 18b des gleichen Bremskreises 12a oder 12b in den Hauptbremszylinder 14 kleiner-gleich einem Ansprechdruck des jeweiligen Flüssigkeitsspeichers 16a oder 16b reduziert ist.

Wie in Fig. 1 bildlich wiedergegeben ist, kann der zu entleerende Flüssigkeitsspeicher 16a oder 16b eine in die Hydraulik des jeweiligen Bremssystems integrierte Speicherkammer 16a und 16b, speziell eine Niederdruckspeicherkammer 16a und 16b, sein. Eine Verwendbarkeit der Steuervorrichtung 10 ist jedoch auf keinen speziellen Flüssigkeitsspeichertyp beschränkt. Wie in Fig. 1 ebenfalls bildlich dargestellt ist, kann die Steuervorrichtung 10/ihre Elektronikeinrichtung 26 auch zum gleichzeitigen Entleeren mehrerer Flüssigkeitsspeicher 16a und 16b mehrerer Bremskreise 12a und 12b des gleichen Bremssystems ausgelegt sein.

Lediglich beispielhaft hat das Bremssystem der Fig. 1 zwei Bremskreise 12a und 12b mit je einem ersten Radbremszylinder 28a oder 28b und je einem zweiten Radbremszylinder 30a oder 30b. Zusätzlich ist jeder der Bremskreise 12a und 12b mit einem ersten Radauslassventil 22a oder 22b und einem zweiten Radauslassventil 24a oder 24b als seinen Radauslassventilen 22a, 22b, 24a und 24b ausgestattet. Jeder der Bremskreise 12a und 12b hat einen an dem Hauptbremszylinder 14 mündenden ersten Leitungsabschnitt 32a oder 32b, welcher sich zu seinem Umschaltventil 20a oder 20b und zu seinem Hochdruckschaltventil 18a oder 18b aufgabelt. Ein an dem Umschaltventil 20a oder 20b mündender zweiter Leitungsabschnitt 34a oder 34b des jeweiligen Bremskreises 12a oder 12b gabelt sich zu einem ersten Radeinlassventil 36a oder 36b und seinem zweiten Radeinlassventil 38a oder 38b auf. Der erste Radbremszylinder 28a oder 28b ist an einem dritten Leitungsabschnitt 40a oder 40b des jeweiligen Bremskreises 12a oder 12b angebunden/anbindbar, welcher sich zu dem ersten Radeinlassventil 36a oder 36b und dem ersten Radauslassventil 22a oder 22b aufgabelt. Entsprechend ist der zweiter Radbremszylinder 30a oder 30b an einem vierten Leitungsabschnitt 42a oder 42b des gleichen Bremskreises 12a oder 12b angebunden/anbindbar, welcher sich zu dem zweiten Radeinlassventil 38a oder 38b und dem zweiten Radauslassventil 24a oder 24b aufgabelt.

Ein an einer Ansaugseite einer Pumpeinrichtung 44a oder 44b des jeweiligen Bremskreises 12a oder 12b mündender fünfter Leitungsabschnitt 46a oder 46b gabelt sich zu dem ersten Radauslassventil 22a oder 22b und dem zweiten Radauslassventil 24a oder 24b auf, wobei der Flüssigkeitsspeicher 16a oder 16b des jeweiligen Bremskreises 12a oder 12b an dem fünften Leitungsabschnitt 46a oder 46b angebunden ist. Ein an einer Förderseite der Pumpeinrichtung 44a oder 44b mündender sechster Leitungsabschnitt 48a oder 48b des jeweiligen Bremskreises 12a oder 12b mündet zusätzlich an dem zweiten Leitungsabschnitt 34a oder 34b. Außerdem mündet ein siebter Leitungsabschnitt 50a oder 50b des jeweiligen Bremskreises 12a oder 12b an dem Hochdruckschaltventil 18a oder 18b und an dem fünften Leitungsabschnitt 46a oder 46b.

Als optionale Weiterbildung kann noch mindestens ein Überdruckventil 52a oder 52b zwischen dem Flüssigkeitsspeicher 16a oder 16b und der Pumpeinrichtung 44a oder 44b in den fünften Leitungsabschnitt 46a oder 46b eingesetzt sein. Ebenso können ein Filter 54a oder 54b, eine Drossel 56a oder 56b und/oder ein Rückschlagventil 58a oder 58b in dem sechsten Leitungsabschnitt 48a oder 48b angeordnet sein. Vorzugsweise ist ein Bremsflüssigkeitsreservoir 60 an dem Hauptbremszylinder 14 angebunden. Wahlweise kann auch noch ein Bremskraftverstärker 62 dem Hauptbremszylinder 14 vorgelagert sein. Des Weiteren kann noch mindestens ein Vordrucksensor 64 und/oder ein Drucksensor an mindestens einem der Bremskreise 12a und 12b angebunden sein.

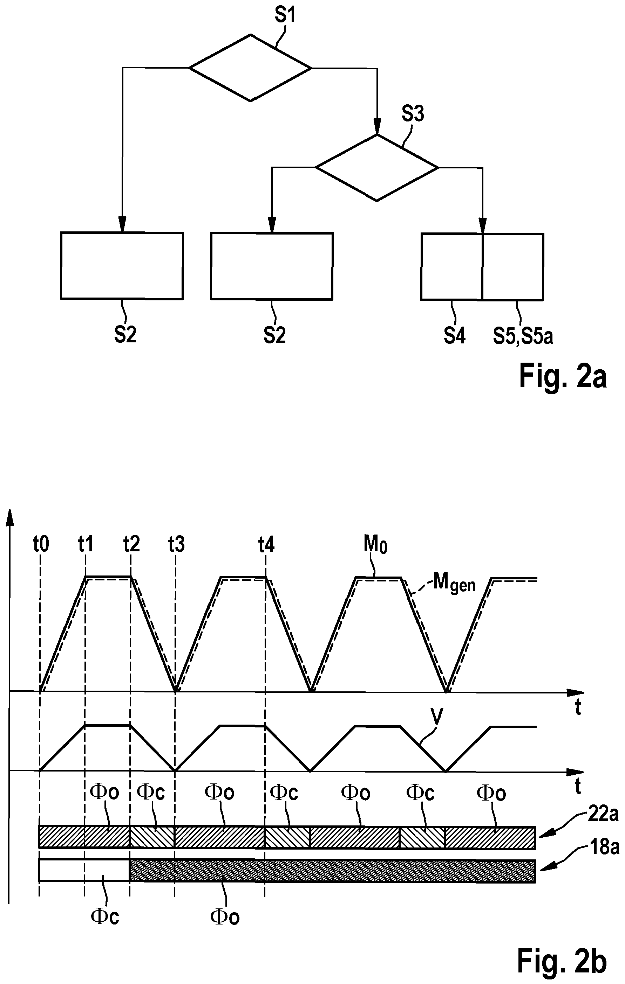

Fig. 2a bis 2d zeigen ein Flussdiagramm, ein Zeitdiagramm und schematische Teildarstellungen eines Bremssystems zum Erläutern einer ersten Ausführungsform des Verfahrens zum zumindest teilweisen Entleeren eines Flüssigkeitsspeichers eines Bremssystems eines Fahrzeugs.

Das im Weiteren beschriebene Verfahren kann an (nahezu) jedem Bremssystem ausgeführt werden, welches zumindest einen Bremskreis 12a aufweist, welcher an einem Hauptbremszylinder 14 des Bremssystems angebunden ist, mit einem Flüssigkeitsspeicher 16a und einem Hochdruckschaltventil 18a ausgebildet ist, und welcher zusätzlich noch ein Umschaltventil 20a und/oder mindestens ein Radauslassventil 22a und 24a umfasst. Ebenso ist eine Ausführbarkeit des Verfahrens auf keinen speziellen Fahrzeugtyp/Kraftfahrzeugtyp des mit dem jeweiligen Bremssystem ausgestatteten Fahrzeugs/Kraftfahrzeugs beschränkt. Die "bildliche Wiedergabe" des Verfahrens unter Verwendung zumindest des ersten Bremskreises 12a und des Hauptbremszylinders 14 des Bremssystems der Fig. 1 dient nur der besseren Verständlichkeit.

Bei der hier beschriebenen Ausführungsform geht dem Entleeren des Flüssigkeitsspeichers ein optionaler Verfahrensschritt S1 voraus, auf dessen Ausführung jedoch auch verzichtet werden kann. In dem Verfahrensschritt S1 wird untersucht, ob ein mittels einer Fahrerbremskraft F bewirkter Verstellweg x eines an dem Hauptbremszylinder 14 angebundenen Bremspedals 66 aus dessen unbetätigter Ausgangsstellung ungleich Null ist, ob eine zeitliche Ableitung des Verstellwegs x größer-gleich Null ist und ob ein dem Verstellweg x entsprechendes Soll-Bremsmoment M₀ als Generator-Bremsmoment M_{gen} mittels mindestens eines rekuperativ betriebenen Elektromotors des Fahrzeugs ausführbar ist. Der Verstellweg x kann beispielsweise mittels eines Stangenwegsensors 68 gemessen werden.

In dem Zeitdiagramm der Fig. 2b sind das Soll-Bremsmoment M₀, das Generator-Bremsmoment M_{gen}, ein in einem Flüssigkeitsspeicher 16a des ersten Bremskreises 12a vorliegendes Volumen V, ein Öffnungszustand eines ersten Radauslassventils 22a des ersten Bremskreises 12a und ein Öffnungszustand eines Hochdruckschaltventils 18a des ersten Bremskreises 12a entlang einer Zeitachse t wiedergegeben.

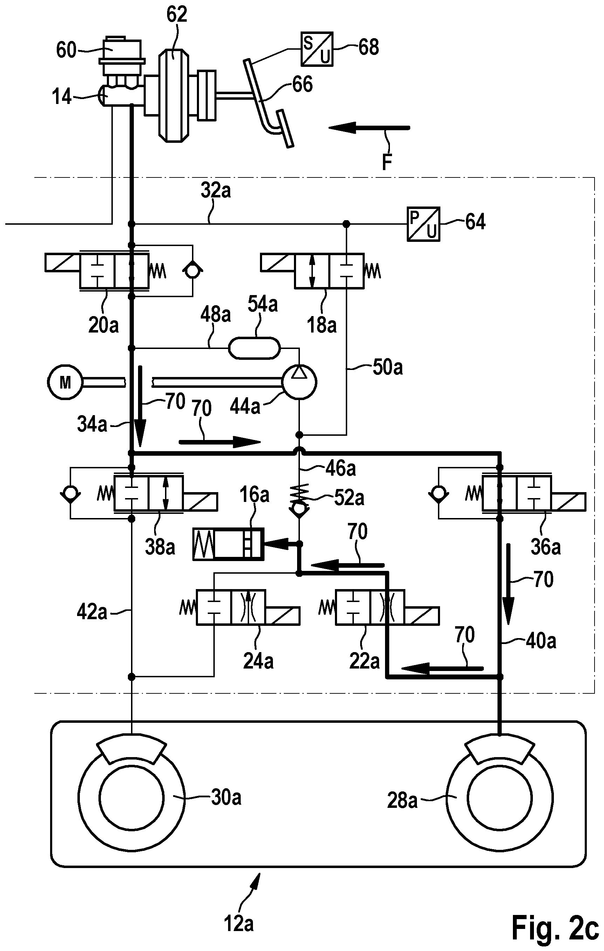

Ab einer Zeit t0 betätigt der Fahrer das Bremspedal 66. Solange der Verstellweg x ungleich Null ist, die zeitliche Ableitung des Verstellwegs x größer-gleich Null ist und das dem Verstellweg x entsprechende Soll-Bremsmoment M₀ als Generator-Bremsmoment M_{gen} ausführbar ist, wird ein Verfahrensschritt S2 ausgeführt, welcher in Fig. 2c schematisch dargestellt ist. In dem Verfahrensschritt S2 werden ein Umschaltventil 20a des ersten Bremskreises 12a, ein einem ersten Radbremszylinder 28a des ersten Bremskreises 12a zugeordnetes erstes Radeinlassventil 36a und das dem ersten Radbremszylinder 28a zugeordnete erste Radauslassventil 22a so in einen zumindest teilgeöffneten Zustand Φo gesteuert und/oder gehalten, dass, wie mittels der Pfeile 70 bildlich wiedergegeben ist, die mittels der Fahrerbremskraft F aus dem Hauptbremszylinder 14 herausgedrückte Bremsflüssigkeit über das Umschaltventil 20a, das erste Radeinlassventil 36a und das erste Radauslassventil 22a in den Flüssigkeitsspeicher 16a verschoben wird. Vorzugsweise werden gleichzeitig ein einem zweiten Radbremszylinder 30a des ersten Bremskreises 12a zugeordnetes zweites Radeinlassventil 38a und ein dem zweiten Radbremszylinder 30a zugeordnetes zweites Radauslassventil 24a des ersten Bremskreises 12a in einen geschlossenen Zustand gesteuert und/oder gehalten, wodurch ein Bremsflüssigkeitstransfer in den zweiten Radbremszylinder 30a verhindert wird. Während in dem ersten Radbremszylinder 28a somit ein erster Bremsdruck gleich einem Ansprechdruck des Flüssigkeitsspeichers 16a vorliegt, kann ein in dem zweiten Radbremszylinder 30a vorliegende zweiter Bremsdruck (nahezu) gleich dem Atmosphärendruck gehalten werden. Auch das Hochdruckschaltventil 18a wird in seinen geschlossenen Zustand Φc gesteuert/gehalten. Der Verfahrensschritt S2 wird auch fortgesetzt, nachdem zur Zeit t1 die zeitliche Ableitung des Verstellwegs x gleich Null wird.

Sobald zur Zeit t2 festgestellt wird, dass die zeitliche Ableitung des Verstellwegs x des Bremspedals 66 kleiner Null wird (obwohl das dem Verstellweg x entsprechende Soll-Bremsmoment M₀ weiterhin als Generator-Bremsmoment M_{gen} ausführbar ist), wird in einem weiteren optionalen Verfahrensschritt S3 untersucht, ob eine zumindest teilweise Entleerung des Flüssigkeitsspeichers 16a wünschenswert ist. Beispielsweise kann dies geschehen, indem ermittelt wird, ob der in dem ersten Radbremszylinder 28a vorliegende erste Bremsdruck unter einem in dem Flüssigkeitsspeicher 16a vorliegenden Speicherdruck liegt. Ist dies nicht der Fall, so wird der Verfahrensschritt S2 fortgesetzt. Andernfalls wird der Flüssigkeitsspeicher 16a zumindest teilweise entleert.

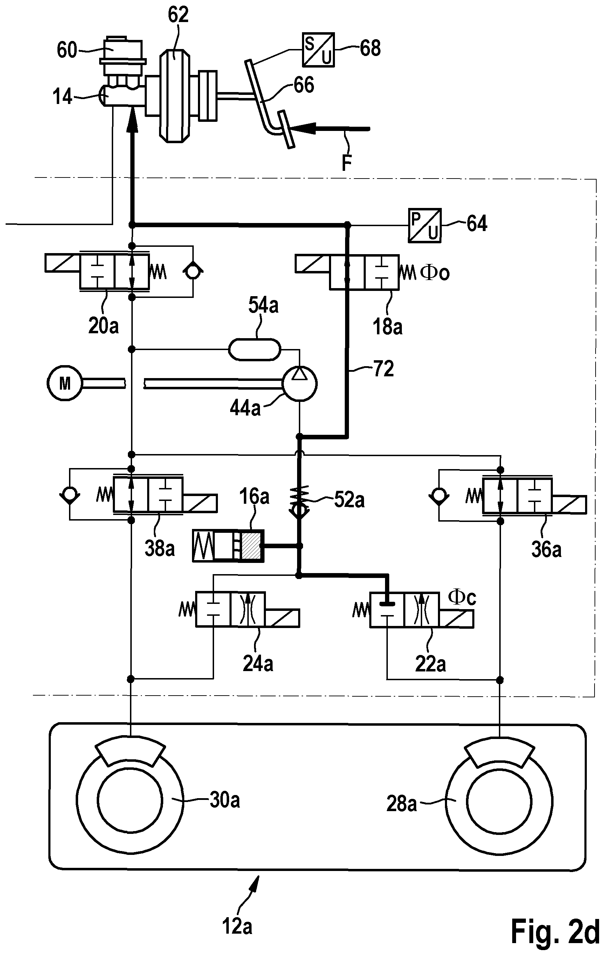

Bei der hier beschriebenen Ausführungsform wird ab dem Zeitpunkt t2 mit dem zumindest teilweisen Entleeren des Flüssigkeitsspeichers 16a begonnen: Als Verfahrensschritt S4 wird dazu das Hochdruckschaltventil 18a für eine vorgegebene oder festgelegte Öffnungszeit in einen zumindest teilweise geöffneten Zustand Φo so gesteuert, dass, wie mittels eines Pfeils 72 in Fig. 2d bildlich wiedergegeben ist, während der Öffnungszeit Bremsflüssigkeit aus dem Flüssigkeitsspeicher 16a über das zumindest teilweise geöffnete Hochdruckschaltventil 18a in den Hauptbremszylinder 14 fließt.

Gleichzeitig mit dem Verfahrensschritt S4 wird auch ein Verfahrensschritt S5 ausgeführt, in welchem das Umschaltventil 20a des ersten Bremskreises 12a, das einzige Radauslassventil des ersten Bremskreises 12a und/oder alle Radauslassventile 22a und 22b des ersten Bremskreises 12a während der gesamten Öffnungszeit in einen Zustand gesteuert oder gehalten werden, in welchem ein Bremsflüssigkeitstransfer aus dem Flüssigkeitsspeicher 16a durch das jeweilige Ventil 20a, 22a und 24a blockiert wird. Beispielhaft wird dazu bei der hier beschriebenen Ausführungsform als Verfahrensschritt S5a des Verfahrens das erste Radauslassventil 22a des ersten Bremskreises 12a, welches aufgrund seiner Auslegung und seiner Ausrichtung in einem zumindest teilweise geöffneten Zustand Φo für Bremsflüssigkeit aus dem Flüssigkeitsspeicher 16a durchlässig ist, während der gesamten Öffnungszeit in seinen geschlossenen Zustand Φc gesteuert. Außerdem wird das zweite Radauslassventil 24a des ersten Bremskreises 12a während der gesamten Öffnungszeit in seinen geschlossenen Zustand Φc gehalten. Erkennbar ist anhand der Fig. 2d, dass mittels des Ausführens des Verfahrensschritts S5a ein Bremsflüssigkeitstransfer aus dem Flüssigkeitsspeicher 16a durch die Auslassventile 22a und 24a des Bremskreises 12a vollständig unterbunden ist. Durch Ausführen des hier beschriebenen Verfahrens können somit die oben erläuterten Vorteile auch für das dazu verwendete Bremssystem genutzt werden.

Unter der Öffnungszeit kann eine fest vorgegebene Öffnungszeit verstanden werden. Ebenso kann die Öffnungszeit selbst-festgelegt sein. Beispielsweise kann dazu die Öffnungszeit unter Berücksichtigung einer Druckdifferenz zwischen dem in dem Flüssigkeitsspeicher 16a vorliegenden Speicherdruck minus dem in dem ersten Radbremszylinder 28a vorliegenden ersten Bremsdruck festgelegt werden. Ebenso kann die Öffnungszeit solange "abgewartet" werden, bis zumindest ein vorgegebenes Ereignis eintritt. Insbesondere kann die Öffnungszeit "abgewartet" werden, bis die zeitliche Ableitung des Verstellwegs x des Bremspedals 66 größer-gleich Null wird und/oder bis der Speicherdruck in dem Flüssigkeitsspeicher 16a kleiner-gleich dem Ansprechdruck wird.

Erkennbar ist anhand des Zeitdiagramms der Fig. 2b, dass bei einer späteren Zunahme des Verstellwegs x des Bremspedals 66 ab der Zeit t3 das erste Radauslassventil 22a wieder geöffnet wird, während das Hochdruckschaltventil 18a in seinem zumindest teilweise offenen Zustand Φo verbleiben kann. Sobald der Verstellweg x des Bremspedals zu der Zeit t4 wieder abnimmt, kann unter einem erneuten Steuern des ersten Radauslassventils 22a in seinen geschlossenen Zustand Φc das in dem Flüssigkeitsspeicher 16a vorliegende Volumen V über das in seinem zumindest teilweise offenen Zustand Φo vorliegende Hochdruckschaltventil 18a wieder aus dem Flüssigkeitsspeicher 16a in den Hauptbremszylinder 14 transfiert werden.

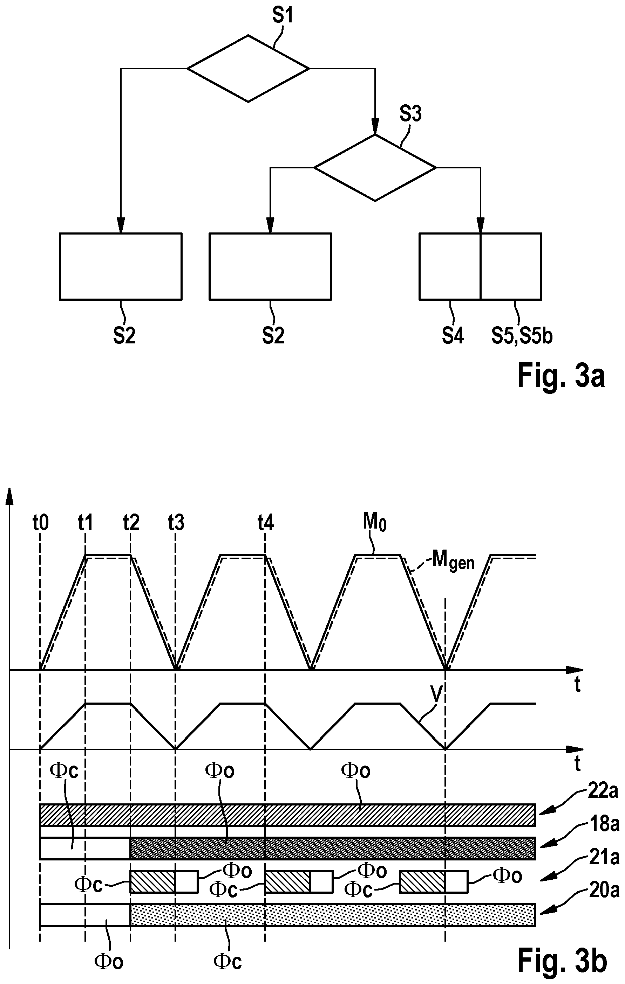

Fig. 3a bis 3d zeigen ein Flussdiagramm, ein Zeitdiagramm und schematische Teildarstellungen eines Bremssystems zum Erläutern einer zweiten Ausführungsform des Verfahrens zum zumindest teilweisen Entleeren eines Flüssigkeitsspeichers eines Bremssystems eines Fahrzeugs.

Bezüglich der Ausführbarkeit des im Weiteren beschriebenen Verfahrens wird auf die Erläuterungen zu der vorausgehenden Ausführungsform verwiesen.

Wie anhand des Flussdiagramms der Fig. 3a erkennbar ist, weist das hier beschriebe Verfahren die oben schon erläuterten Verfahrensschritte S1 bis S5 auf. In dem Zeitdiagramm der Fig. 3b sind das Soll-Bremsmoment M₀, das Generator-Bremsmoment M_{gen}, das in dem Flüssigkeitsspeicher 16a des ersten Bremskreises 12a vorliegende Volumen V, der Öffnungszustand des ersten Radauslassventils 22a des ersten Bremskreises 12a, der Öffnungszustand des Hochdruckschaltventils 18a des ersten Bremskreises 12a, ein Öffnungszustand eines Umschaltventils 20a des ersten Bremskreises 12a und ein Öffnungszustand eines parallel zu dem Umschaltventil 20a angeordneten Rückschlagventils 21a entlang einer Zeitachse t wiedergegeben. Die Zeiten t1 bis t4 entsprechend der Beschreibung der vorausgehenden Ausführungsform.

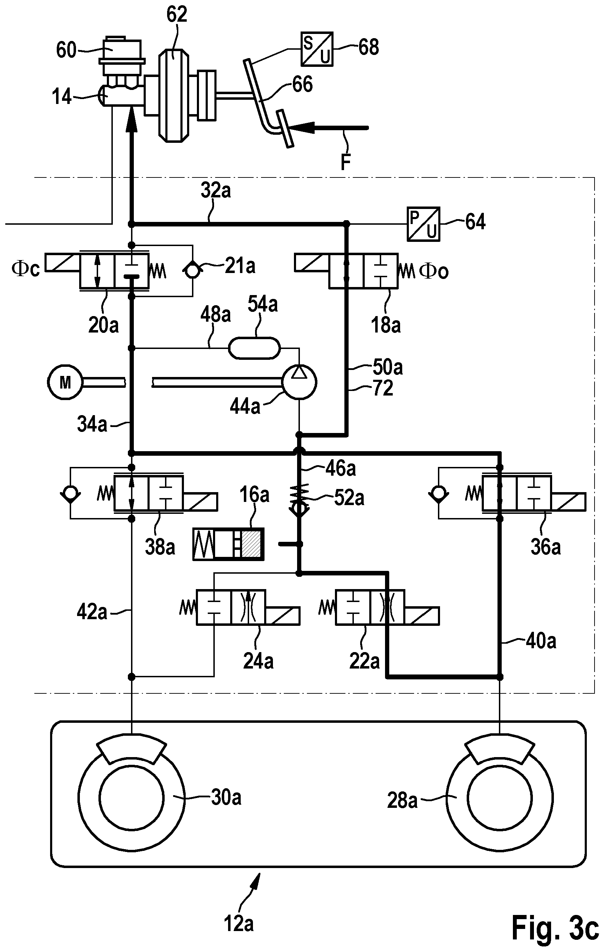

Im Unterschied zu der vorausgehenden Ausführungsform wird bei dem hier beschriebenen Verfahren als Verfahrensschritt S5 ab der Zeit t2 ein Verfahrensschritt S5b ausgeführt, in welchem das Umschaltventil 20a des ersten Bremskreises 12a während der gesamten Öffnungszeit in seinen geschlossenen Zustand Φc gesteuert oder gehalten wird. (Unter dem in seinen geschlossenen Zustand gesteuerten oder gehaltenen Umschaltventil 20a ist ein Ventil 20a zu verstehen, welches aufgrund seiner Auslegung und seiner Ausrichtung in einem zumindest teilweise geöffneten Zustand Φo für Bremsflüssigkeit aus dem Flüssigkeitsspeicher 16a und durch das mindestens eine Radauslassventil 22a und 24a durchlässig ist.) Gleichzeitig wird das erste Radauslassventil 22a während der gesamten Öffnungszeit in seinen zumindest teilweise geöffneten Zustand Φo gehalten. Wie anhand der Fig. 3c erkennbar ist, kann trotz des Vorliegend des ersten Radauslassventils 22a in seinen zumindest teilweise geöffneten Zustand Φo durch das geschlossene Vorliegen des Umschaltventils 20a des ersten Bremskreises 12a sichergestellt werden, dass der unerwünschte Bremsflüssigkeitsstrom aus dem Flüssigkeitsspeicher 16a durch das mindestens eine Radauslassventil 22a und 24a auf eine nur kurzzeitig auftretende und vernachlässigbar schwache Fließbewegung durch das erste Radauslassventil 22a begrenzt ist. Die oben erläuterten Vorteile können deshalb durch Ausführen des hier beschriebenen Verfahrens auch für das dazu verwendete Bremssystem genutzt werden. Während des mittels des Pfeils 72 in Fig. 3c wiedergegebenen zumindest teilweisen Entleerens des Flüssigkeitsspeichers 16a bleibt das parallel zu dem Umschaltventils 20a angeordnete Rückschlagventil 21a in seinen geschlossenen Zustand Φc.

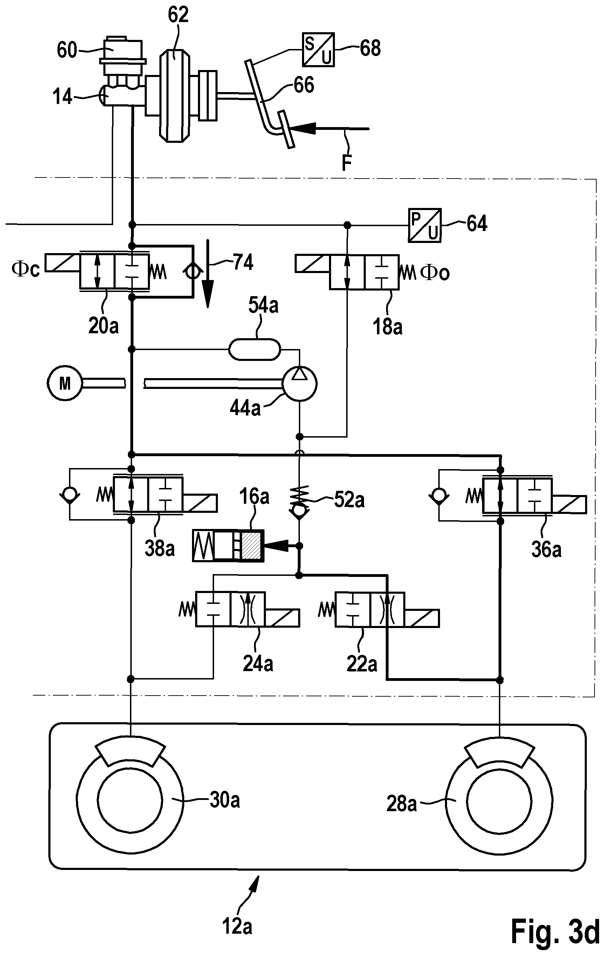

Wie in Fig. 3d mittels eines Pfeils 74 bildlich dargestellt ist, kann der Fahrer mittels seiner Fahrerbremskraft F bei einer späteren Zunahme des Verstellwegs x des Bremspedals 66 ab der Zeit t3 trotz des Vorliegend des Umschaltventils 20a in seinem geschlossenen Zustand Φc die aus dem Hauptbremszylinder 14 herausgedrückte Bremsflüssigkeit über das parallel zu dem Umschaltventil 20a angeordnete/ausgebildete Rückschlagventil 21a, das zumindest teilweise offene erste Radeinlassventil 36a und das zumindest teilweise offene erste Radauslassventil 22a in den Flüssigkeitsspeicher 16a verschieben. Somit ist ein erneutes Schalten des Umschaltventils 20a in seinen zumindest teilweise offenen Zustand Φo zur Zeit t3 nicht notwendig. Das Umschaltventil 20a kann deshalb nach seinem Schließen zur Zeit t2 während der gesamten mittels des Flussdiagramms der Fig. 3b wiedergegebenen Bremsung in seinem geschlossenen Zustand Φc verbleiben. Entsprechend kann auch das erste Radauslassventil 22a nach seinem Öffnen zur Zeit t0 während der gesamten Bremsung in seinem zumindest teilweise offenen Zustand Φo verbleiben.

Bei einem Ausführen der hier beschriebenen Ausführungsform treten deshalb keine/kaum Ventilschaltgeräusche auf. Außerdem ist zum Ausführen der hier beschriebenen Ausführungsform während der mittels des Flussdiagramms der Fig. 3b wiedergegebenen Bremsung kein schnelles Öffnen des ersten Radauslassventils 22a bei einer plötzlichen Zunahme des Verstellwegs x des Bremspedals 66 notwendig. Somit ist auch kein unerwünschter Stauungsdruck an dem verzögert geöffneten ersten Radauslassventil 22a zu befürchten.

Bezüglich weiterer Schritte des Verfahrens der Fig. 3a bis 3d wird auf die zuvor beschriebene Ausführungsform der Fig. 2a bis 2d verwiesen.

## Patentansprüche

1. Steuervorrichtung (10) für ein Bremssystem eines Fahrzeugs mit zumindest einem einen Flüssigkeitsspeicher (16a, 16b) umfassenden Bremskreis (12a, 12b) mit:
einer Elektronikeinrichtung (26), welche dazu ausgelegt und/oder programmiert ist, ein Hochdruckschaltventil (18a, 18b) des Bremskreises (12a, 12b) für eine vorgegebene oder festgelegte Öffnungszeit in einen zumindest teilweise geöffneten Zustand zu schalten, so dass während der Öffnungszeit Bremsflüssigkeit aus dem Flüssigkeitsspeicher (16a, 16b) über das zumindest teilweise geöffnete Hochdruckschaltventil (18a, 18b) in einen Hauptbremszylinder (14) des Bremssystems mit dem daran angebundenen Bremskreis (12a, 12b) transferierbar ist;
**dadurch gekennzeichnet, dass**
die Elektronikeinrichtung (26) zusätzlich dazu ausgelegt und/oder programmiert ist, ein Umschaltventil (20a, 20b) des Bremskreises (12a, 12b), das einzige Radauslassventil des Bremskreises und/oder alle Radauslassventile (22a, 22b, 24a, 24b) des Bremskreises (12a, 12b) während der gesamten Öffnungszeit in einen Zustand, in welchem ein Bremsflüssigkeitstransfer aus dem Flüssigkeitsspeicher (16a, 16b) durch das jeweilige Ventil (20a, 20b, 22a, 22b, 24a, 24b) blockiert ist, zu steuern und/oder zu halten.

2. Steuervorrichtung (10) nach Anspruch 1, wobei die Elektronikeinrichtung (26) dazu ausgelegt und/oder programmiert ist, das Umschaltventil (20a, 20b) des Bremskreises (12a, 12b) während der gesamten Öffnungszeit in seinen geschlossenen Zustand zu steuern oder zu halten.

3. Steuervorrichtung (10) nach Anspruch 1 oder 2, wobei die Elektronikeinrichtung (26) dazu ausgelegt und/oder programmiert ist, das einzige Radauslassventil des Bremskreises oder das mindestens eine der Radauslassventile (22a, 22b, 24a, 24b) des Bremskreises (12a, 12b), welches aufgrund seiner Auslegung und seiner Ausrichtung in einem zumindest teilweise geöffneten Zustand für Bremsflüssigkeit aus dem Flüssigkeitsspeicher (16a, 16b) durchlässig ist, während der gesamten Öffnungszeit in seinen geschlossenen Zustand zu steuern und/oder zu halten.

4. Bremssystem für ein Fahrzeug mit:
einer Steuervorrichtung (10) nach einem der vorhergehenden Ansprüche; und
zumindest dem an dem Hauptbremszylinder (14) des Bremssystems angebundenen Bremskreis (12a, 12b) mit dem Flüssigkeitsspeicher (16a, 16b) und dem mittels der Elektronikeinrichtung (26) der Steuervorrichtung (10) ansteuerbaren Hochdruckschaltventil (18a, 18b), wobei der Bremskreis (12a, 12b) zusätzlich noch das Umschaltventil (20a, 20b), das einzige Radauslassventil und/oder die Radauslassventile (22a, 22b, 24a, 24b) umfasst, und wobei das Umschaltventil (20a, 20b), das einzige Radauslassventil und/oder die Radauslassventile (22a, 22b, 24a, 24b) mittels der Elektronikeinrichtung (26) ansteuerbar sind.

5. Bremssystem nach Anspruch 4, wobei das einzige Radauslassventil oder die Radauslassventile (22a, 22b, 24a, 24b) nur je einen Filter (23a, 23b, 25a, 25b) für einen Bremsflüssigkeitstransfer von einem dem jeweiligen Ventil (22a, 22b, 24a, 24b) zugeordneten Radbremszylinder (28a, 28b, 30a, 30b) zu dem Flüssigkeitsspeicher (16a, 16b) aufweisen.

6. Bremssystem nach Anspruch 4 oder 5, wobei das einzige Radauslassventil oder die Radauslassventile (22a, 22b, 24a, 24b) jeweils für den Bremsflüssigkeitstransfer aus dem Flüssigkeitsspeicher durch das jeweilige Ventil filterlos ist/sind.

7. Bremssystem nach einem der Ansprüche 4 bis 6, wobei der Bremskreis (12a, 12b) ein erstes Radauslassventil (22a, 22b) und ein zweites Radauslassventil (24a, 24b) als seine Radauslassventile(22a, 22b, 24a, 24b) umfasst, und wobei ein an dem Hauptbremszylinder (14) mündender erster Leitungsabschnitt (32a, 32b) des Bremskreises (12a, 12b) sich zu dem Umschaltventil (20a, 20b) und zu dem Hochdruckschaltventil (18a, 18b) aufgabelt, ein an dem Umschaltventil (20a, 20b) mündender zweiter Leitungsabschnitt (34a, 34b) des Bremskreises (12a, 12b) sich zu einem ersten Radeinlassventil (36a,36b) und einem zweiten Radeinlassventil (38a, 38b) aufgabelt, ein erster Radbremszylinder (28a, 28b) an einem dritten Leitungsabschnitt (40a, 40b) des Bremskreises (12a, 12b), welcher sich zu dem ersten Radeinlassventil (36a, 36b) und dem ersten Radauslassventil (22a, 22b) aufgabelt, angebunden oder anbindbar ist, ein zweiter Radbremszylinder (30a, 30b) an einem vierten Leitungsabschnitt (42a, 42b) des Bremskreises (12a, 12b), welcher sich zu dem zweiten Radeinlassventil (38a, 38b) und dem zweiten Radauslassventil (24a, 24b) aufgabelt, angebunden oder anbindbar ist, ein an einer Ansaugseite einer Pumpeinrichtung (44a, 44b) des Bremskreises (12a, 12b) mündender fünften Leitungsabschnitt (46a, 46b) des Bremskreises (12a, 12b) sich zu dem ersten Radauslassventil (22a, 22b) und dem zweiten Radauslassventil (24a,24b) aufgabelt, der Flüssigkeitsspeicher (16a, 16b) an dem fünften Leitungsabschnitt (46a, 46b) angebunden ist, ein an einer Förderseite der Pumpeinrichtung (44a, 44b) mündender sechster Leitungsabschnitt (48a, 48b) des Bremskreises (12a, 12b) an dem zweiten Leitungsabschnitt (34a, 34b) mündet und ein an dem Hochdruckschaltventil (18a, 18b) mündender siebter Leitungsabschnitt (50a, 50b) des Bremskreises (12a, 12b) an dem fünften Leitungsabschnitt (46a, 46b) mündet.

8. Verfahren zum zumindest teilweisen Entleeren eines Flüssigkeitsspeichers (16a, 16b) eines Bremssystems eines Fahrzeugs mit den Schritten:
Steuern eines Hochdruckschaltventils (18a, 18b) eines mit dem Flüssigkeitsspeicher (16a, 16b) ausgestatteten Bremskreises (12a, 12b) des Bremssystems für eine vorgegebene oder festgelegte Öffnungszeit in einen zumindest teilweise geöffneten Zustand so, dass während der Öffnungszeit Bremsflüssigkeit aus dem Flüssigkeitsspeicher (16a, 16b) über das zumindest teilweise geöffnete Hochdruckschaltventil (18a, 18b) in einen Hauptbremszylinder (14) des Bremssystems mit dem daran angebundenen Bremskreis (12a, 12b) fließt (S4);
**gekennzeichnet durch**
Steuern oder Halten eines Umschaltventils (20a, 20b) des Bremskreises (12a, 12b), des einzigen Radauslassventils des Bremskreises und/oder aller Radauslassventile (22a, 22b, 24a, 24b) des Bremskreises (12a, 12b) während der gesamten Öffnungszeit in einen Zustand, in welchem ein Bremsflüssigkeitstransfer aus dem Flüssigkeitsspeicher (16a, 16b) durch das jeweilige Ventil (20a, 20b, 22a, 22b, 24a, 24b) blockiert wird (S5).

9. Verfahren nach Anspruch 8, wobei das Umschaltventil (20a, 20b) des Bremskreises (12a, 12b) während der gesamten Öffnungszeit in seinen geschlossenen Zustand gesteuert oder gehalten wird (S5b).

10. Verfahren nach Anspruch 8 oder 9, wobei das einzige Radauslassventil des Bremskreises und/oder das mindestens eine der Radauslassventile (22a, 22b, 24a, 24b) des Bremskreises (12a, 12b), welches aufgrund seiner Auslegung und seiner Ausrichtung in einem zumindest teilweise geöffneten Zustand für Bremsflüssigkeit aus dem Flüssigkeitsspeicher (16a, 16b) durchlässig ist, während der gesamten Öffnungszeit in seinen geschlossenen Zustand gesteuert oder gehalten wird (S5a).

## Claims

1. Control device (10) for a brake system of a vehicle with at least one brake circuit (12a, 12b) comprising a fluid reservoir (16a, 16b), comprising:
an electronic unit (26), which is designed and/or programmed to switch a high-pressure switching valve (18a, 18b) of the brake circuit (12a, 12b) into an at least partially open state for a predetermined or fixed opening time such that, during the opening time, brake fluid is transferable from the fluid reservoir (16a, 16b) via the at least partially open high-pressure switching valve (18a, 18b) into a master brake cylinder (14) of the brake system with the brake circuit (12a, 12b) connected thereto;
**characterized in that**
the electronic unit (26) is additionally designed and/or programmed to direct a switch-over valve (20a, 20b) of the brake circuit (12a, 12b), the single wheel outlet valve of the brake circuit and/or all of the wheel outlet valves (22a, 22b, 24a, 24b) of the brake circuit (12a, 12b) during the entire opening time into a state in which a brake fluid transfer from the fluid reservoir (16a, 16b) is blocked by the respective valve (20a, 20b, 22a, 22b, 24a, 24b) and/or to keep said valves in said state.

2. Control device (10) according to Claim 1, wherein the electronic unit (26) is designed and/or programmed to direct the switch-over valve (20a, 20b) of the brake circuit (12a, 12b) during the entire opening time into its closed state or to keep said valve in said state.

3. Control device (10) according to Claim 1 or 2, wherein the electronic unit (26) is designed and/or programmed to direct the only wheel outlet valve of the brake circuit or the at least one of the wheel outlet valves (22a, 22b, 24a, 24b) of the brake circuit (12a, 12b) that, owing to its design and its orientation in an at least partially open state is permeable to brake fluid from the fluid reservoir (16a, 16b), during the entire opening time into its closed state and/or to keep said valve in said state.

4. Brake system for a vehicle, having:
a control device (10) according to one of the preceding claims; and
at least the brake circuit (12a, 12b) which is connected to the master brake cylinder (14) of the brake system and has the fluid reservoir (16a, 16b) and the high-pressure switching valve (18a, 18b) which is activatable by means of the electronic unit (26) of the control device (10), wherein the brake circuit (12a, 12b) additionally also comprises the switch-over valve (20a, 20b), the single wheel outlet valve and/or the wheel outlet valves (22a, 22b, 24a, 24b), and wherein the switch-over valve (20a, 20b), the single wheel outlet valve and/or the wheel outlet valves (22a, 22b, 24a, 24b) are activatable by means of the electronic unit (26).

5. Brake system according to Claim 4, wherein the single wheel outlet valve or the wheel outlet valves (22a, 22b, 24a, 24b) have only one filter (23a, 23b, 25a, 25b) each for transfer of brake fluid from a wheel brake cylinder (28a, 28b, 30a, 30b) assigned to the respective valve (22a, 22b, 24a, 24b) to the fluid reservoir (16a, 16b).

6. Brake system according to Claim 4 or 5, wherein the single wheel outlet valve or the wheel outlet valves (22a, 22b, 24a, 24b) is/are in each case filterless for the transfer of brake fluid from the fluid reservoir through the respective valve.

7. Brake system according to any one of Claims 4 to 6, wherein the brake circuit (12a, 12b) comprises a first wheel outlet valve (22a, 22b) and a second wheel outlet valve (24a, 24b) as its wheel outlet valves (22a, 22b, 24a, 24b), and wherein a first line section (32a, 32b) of the brake circuit (12a, 12b) opening at the master brake cylinder (14) forks to the switch-over valve (20a, 20b) and to the high-pressure switching valve (18a, 18b), a second line section (34a, 34b) of the brake circuit (12a, 12b) opening at the switch-over valve (20a, 20b) forks to a first wheel inlet valve (36a, 36b) and to a second wheel inlet valve (38a, 38b), a first wheel brake cylinder (28a, 28b) is connected or connectable to a third line section (40a, 40b) of the brake circuit (12a, 12b), which third line section forks to the first wheel inlet valve (36a, 36b) and to the first wheel outlet valve (22a, 22b), a second wheel brake cylinder (30a, 30b) is connected or connectable to a fourth line section (42a, 42b) of the brake circuit (12a, 12b), which fourth line section forks to the second wheel inlet valve (38a, 38b) and to the second wheel outlet valve (24a, 24b), a fifth line section (46a, 46b) of the brake circuit (12a, 12b) opening at a suction side of a pump unit (44a, 44b) of the brake circuit (12a, 12b) forks to the first wheel outlet valve (22a, 22b) and to the second wheel outlet valve (24a, 24b), the fluid reservoir (16a, 16b) is connected to the fifth line section (46a, 46b), a sixth line section (48a, 48b) of the brake circuit (12a, 12b) opening at a delivery side of the pump unit (44a, 44b) opens at the second line section (34a, 34b), and a seventh line section (50a, 50b) of the brake circuit (12a, 12b) opening at the high-pressure switching valve (18a, 18b) opens at the fifth line section (46a, 46b).

8. Method for at least partially emptying a fluid reservoir (16a, 16b) of a brake system of a vehicle, having the following steps:
directing a high-pressure switching valve (18a, 18b) of a brake circuit (12a, 12b) of the brake system, which brake circuit is equipped with the fluid reservoir (16a, 16b), for a predetermined or fixed opening time into an at least partially open state such that, during the opening time, brake fluid flows from the fluid reservoir (16a, 16b) via the at least partially open high-pressure switching valve (18a, 18b) into a master brake cylinder (14) of the brake system with the brake circuit (12a, 12b) connected thereto (S4);
**characterized by**
directing a switch-over valve (20a, 20b) of the brake circuit (12a, 12b), the single wheel outlet valve of the brake circuit and/or all of the wheel outlet valves (22a, 22b, 24a, 24b) of the brake circuit (12a, 12b) during the entire opening time into a state in which a brake fluid transfer from the fluid reservoir (16a, 16b) is blocked by the respective valve (20a, 20b, 22a, 22b, 24a, 24b) or keeping said valves in said state (S5).

9. Method according to Claim 8, wherein the switch-over valve (20a, 20b) of the brake circuit (12a, 12b) is directed during the entire opening time into its closed state or is kept therein (S5b).

10. Method according to Claim 8 or 9, wherein the single wheel outlet valve of the brake circuit and/or the at least one of the wheel outlet valves (22a, 22b, 24a, 24b) of the brake circuit (12a, 12b) that, owing to its design and its orientation in an at least partially open state is permeable to brake fluid from the fluid reservoir (16a, 16b), is directed during the entire opening time into its closed state or is kept therein (S5a).

## Revendications

1. Dispositif de commande (10) pour un système de freinage d'un véhicule ayant au moins un circuit de freinage (12a, 12b) comprenant un réservoir de liquide (16a, 16b) avec :
un dispositif électronique (26) qui est conçu et/ou programmé pour commuter une vanne (18a, 18b) de commutation haute pression du circuit de freinage (12a, 12b) dans un état au moins partiellement ouvert pendant un temps d'ouverture prédéfini ou fixé, de sorte que, pendant le temps d'ouverture, du liquide de frein est apte à être transféré du réservoir de liquide (16a, 16b) via la vanne (18a, 18b) de commutation haute pression au moins partiellement ouverte dans un maître-cylindre de frein (14) du système de freinage avec le circuit de freinage (12a, 12b) qui y est raccordé ;
**caractérisé en ce que**
le dispositif électronique (26) est en outre conçu et/ou programmé pour commander ou maintenir une vanne de commutation (20a, 20b) du circuit de freinage (12a, 12b), la vanne unique d'échappement de roue du circuit de freinage et/ou toutes les vannes d'échappement de roue (22a, 22b, 24a, 24b) du circuit de freinage (12a, 12b) pendant toute la durée d'ouverture, dans un état dans lequel un transfert de liquide de frein depuis le réservoir de liquide (16a, 16b) est bloqué par la vanne respective (20a, 20b, 22a, 22b, 24a, 24b).

2. Dispositif de commande (10) selon la revendication 1, dans lequel le dispositif électronique (26) est conçu et/ou programmé pour commander ou maintenir la vanne de commutation (20a, 20b) du circuit de freinage (12a, 12b) dans son état fermé pendant toute la durée d'ouverture.

3. Dispositif de commande (10) selon la revendication 1 ou la revendication 2, dans lequel le dispositif électronique (26) est conçu et/ou programmé pour commander et/ou maintenir dans son état fermé, pendant toute la durée d'ouverture, la vanne unique d'échappement de roue du circuit de freinage ou ladite au moins une des vannes d'échappement de roue (22a, 22b, 24a, 24b) du circuit de freinage (12a, 12b) qui, de par sa conception et son orientation, est perméable au liquide de frein provenant du réservoir de liquide (16a, 16b) dans un état au moins partiellement ouvert.

4. Système de freinage pour un véhicule, comprenant :
un dispositif de commande (10) selon l'une des revendications précédentes ; et
au moins le circuit de freinage (12a, 12b), relié au maître-cylindre de frein (14) du système de freinage, avec le réservoir de liquide (16a, 16b) et la vanne (18a, 18b) de commutation haute pression apte à être commandée au moyen du dispositif électronique (26) du dispositif de commande (10), le circuit de freinage (12a, 12b) comprenant en outre encore la vanne de commutation (20a, 20b), la vanne unique d'échappement de roue et/ou les vannes d'échappement de roue (22a, 22b, 24a, 24b), et dans lequel la vanne de commutation (20a, 20b), la vanne unique d'échappement de roue et/ou les vannes d'échappement de roue (22a, 22b, 24a, 24b) sont aptes à être commandées au moyen du dispositif électronique (26).

5. Système de freinage selon la revendication 4, dans lequel la vanne unique d'échappement de roue ou les vannes d'échappement de roue (22a, 22b, 24a, 24b) ne comportent chacune qu'un seul filtre (23a, 23b, 25a, 25b) pour un transfert de liquide de frein depuis un cylindre de frein de roue (28a, 28b, 30a, 30b) associé à la vanne (22a, 22b, 24a, 24b) correspondante, vers le réservoir de liquide (16a, 16b).

6. Système de freinage selon la revendication 4 ou la revendication 5, dans lequel la vanne unique d'échappement de roue ou les vannes d'échappement de roue (22a, 22b, 24a, 24b) sont chacune dépourvues de filtre pour le transfert de liquide de frein depuis le réservoir de liquide à travers la vanne respective.

7. Système de freinage selon l'une des revendications 4 à 6, dans lequel le circuit de freinage (12a, 12b) comprend une première vanne (22a, 22b) d'échappement de roue et une deuxième vanne (24a, 24b) d'échappement de roue en tant que ses vannes d'échappement de roue (22a, 22b, 24a, 24b), et dans lequel une première section de conduite (32a, 32b) du circuit de freinage (12a, 12b), débouchant au niveau du maître-cylindre de frein (14), bifurque vers la vanne de commutation (20a, 20b) et vers la vanne (18a, 18b) de commutation haute pression, une deuxième section de conduite (34a, 34b) débouchant au niveau de la vanne de commutation (20a, 20b) du circuit de freinage (12a, 12b) bifurque vers une première vanne (36a, 36b) d'admission de roue et une deuxième vanne (38a, 38b) d'admission de roue, un premier cylindre (28a, 28b) de frein de roue est relié ou est apte à être relié à une troisième section de conduite (40a, 40b) du circuit de freinage (12a, 12b) qui bifurque vers la première vanne (36a, 36b) d'admission de roue et la première vanne (22a, 22b) d'échappement de roue, un deuxième cylindre de frein de roue (30a, 30b) est relié ou est apte à être relié à une quatrième section de conduite (42a, 42b) du circuit de freinage (12a, 12b) qui bifurque vers la deuxième vanne (38a, 38b) d'admission de roue et la deuxième vanne (24a, 24b) d'échappement de roue, une cinquième section de conduite (46a, 46b) du circuit de freinage (12a, 12b) débouchant sur un côté d'aspiration d'un dispositif de pompage (44a, 44b) du circuit de freinage (12a, 12b) bifurque vers la première vanne (22a, 22b) d'échappement de roue et la deuxième vanne (24a, 24b) d'échappement de roue, le réservoir de liquide (16a, 16b) est relié à la cinquième section de conduite (46a, 46b), une sixième section de conduite (48a, 48b) du circuit de freinage (12a, 12b) débouchant sur un côté de refoulement du dispositif de pompage (44a, 44b) débouche sur la deuxième section de conduite (34a, 34b), et une septième section de conduite (50a, 50b) du circuit de freinage (12a, 12b), débouchant sur la vanne (18a, 18b) de commutation haute pression, débouche sur la cinquième section de conduite (46a, 46b).

8. Procédé pour vider au moins partiellement un réservoir de liquide (16a, 16b) d'un système de freinage d'un véhicule, comprenant les étapes suivantes :
commande d'une vanne (18a, 18b) de commutation haute pression d'un circuit de freinage (12a, 12b) du système de freinage équipé du réservoir de liquide (16a, 16b), pour un temps d'ouverture prédéterminé ou fixé, dans un état au moins partiellement ouvert, de telle sorte que, pendant le temps d'ouverture, du liquide de frein s'écoule (S4) depuis le réservoir de liquide (16a, 16b) via la vanne (18a, 18b) de commutation haute pression au moins partiellement ouverte, dans un maître-cylindre de frein (14) du système de freinage avec le circuit de freinage (12a, 12b) qui lui est raccordé ;
**caractérisé par**
le fait de commander ou maintenir une vanne de commutation (20a, 20b) du circuit de freinage (12a, 12b), la vanne unique d'échappement de roue du circuit de freinage et/ou toutes les vannes d'échappement de roue (22a, 22b, 24a, 24b) du circuit de freinage (12a, 12b) pendant toute la durée d'ouverture, dans un état dans lequel un transfert de liquide de frein depuis le réservoir de liquide (16a, 16b) est bloqué (S5) par la vanne respective (20a, 20b, 22a, 22b, 24a, 24b).

9. Procédé selon la revendication 8, dans lequel la vanne de commutation (20a, 20b) du circuit de freinage (12a, 12b) est commandée ou maintenue (S5b) dans son état fermé pendant toute la durée d'ouverture.

10. Procédé selon la revendication 8 ou la revendication 9, dans lequel la vanne unique d'échappement de roue du circuit de freinage et/ou ladite au moins une des vannes (22a, 22b, 24a, 24b) d'échappement de roue du circuit de freinage (12a, 12b) qui, de par sa conception et son orientation, est perméable au liquide de frein provenant du réservoir de liquide (16a, 16b) dans un état au moins partiellement ouvert, est commandée ou maintenue (S5a) dans son état fermé pendant toute la durée d'ouverture.
